# EUROPEAN PATENT SPECIFICATION

(11) **EP 2 405 994 B1**
(45) Date of publication and mention of the grant of the patent: **06.06.2018**
(21) Application number: 10709082.1
(22) Date of filing: 05.03.2010
(51) Int. Cl.: B01D 61/48, B01D 61/50, B01D 61/52, C02F 1/44, H01M 8/22

(54) **SPACER, CELL AND DEVICE FOR AN ION-EXCHANGING PROCESS AND METHOD OF OPERATING**
ABSTANDHALTER, ZELLE UND VORRICHTUNG FÜR EIN IONENAUSTAUSCHVERFAHREN UND BETRIEBSVERFAHREN
ENTRETOISE, CELLULE ET DISPOSITIF POUR UN PROCÉDÉ D'ÉCHANGE D'IONS ET PROCÉDÉ D'OPÉRATION

(30) Priority: 11.03.2009 NL 1036698
(43) Date of publication of application: 18.01.2012
(73) Proprietor: Redstack B.V., 8606 JR Sneek (NL)
(72) Inventor: DLUGOLECKI, Piotr, Edward, NL-8934 CJ Leeuwarden (NL)
(74) Representative: Verdijck, Gerardus
(86) International application number: PCT/NL2010/050109
(87) International publication number: WO 2010/104381

(56) References cited:
- EP-A- 1 069 079
- WO-A-2005/011849
- US-A1- 2006 118 420

## Description

The present invention relates to a spacer for separating two adjacent membranes in an ion-exchanging process. Examples of such process are electro dialysis, electro de-ionisation and reverse electro dialysis.

In ion-exchanging processes ion-exchange membranes are used.

EP 1 069 079 A1 and WO 2005/011849 A2 disclose spacers for an electrodeionization process. In conventional processes adjacent membranes are separated by a spacer that is situated between two adjacent ion-exchange membranes. In use the spacers block part of the active membrane area, and also (partly) block ion transport through the solution. This effect is also referred to as spacer shadow effect. This effect has a significant impact on the overall resistance of a stack of membranes with spacers. In case of a reverse electro dialysis process this effect significantly reduces the power generation in such process.

The present invention has as one of its objectives to provide a spacer that increases the overall performance of ion-exchanging processes using membranes.

This objective is achieved with the spacer for separating two adjacent membranes in an ion-exchanging process according to claim 1.

The spacer comprises two different parts. The first part comprises a first material and the second part comprises a second material. By providing at least one of these two materials as an ion-exchanging material the
membrane area that in use is close to the spacer material is no longer blocked. Therefore, the ion exchanging area of the membrane is increased as the ions may transfer through the ion exchanging material of the spacer.

Additionally, the use of ion exchanging material in at least one part of the spacer improves the conductivity in the volume between two adjacent membranes. This is relevant in case fresh water, like river water, is used in reverse electro dialysis processes, for example. Furthermore, in the volumes between two adjacent membranes the conductivity of the ion-exchanging material of the spacer can even be higher as compared to the conductivity of the liquid phase in this volume or compartment. This effect further improves the overall efficiency of an ion-exchanging process provided with a spacer according to the present invention.

In a preferred embodiment according to the present invention the first and second materials are ion-conductive materials.

By choosing the first and second material from ion-conductive materials the effect of the spacer according to the present invention is further improved. The resistance (especially fluid resistance) of the spacer is minimised resulting in a minimal pressure drop over the compartment that is provided with the spacer. This minimal pressure drop results to a large extend from increasing the wettability of the spacer by increasing the hydrophilicity thereof. Preferably, the first part consists of the first material being an anion conductive material. An example of such material is Neosepta AMX. This material may also be used for the anion exchange membrane. Preferably, the second part consists of the second material being a cation conductive material. An example of such material is Neosepta CMX that may also be used for a cation exchanging membrane. Experiments have shown that the use of different types of ion-conductive materials results in the highest efficiency, when using the spacer according to the present invention for an ion-exchanging process. Preferably, a first part of the spacer comprising anion conductive material is provided adjacent the anion exchanging membrane and the second part with the cation conductive material is provided adjacent the cation exchanging membrane in case the spacer is used for an ion-exchanging process using membranes. Experiments have shown that this specific configuration of the spacer parts results in an improved efficiency of the overall process. This is achieved by the spacer parts delivering ions approximately in the centre of the volume of compartment between two adjacent membranes. This reduces overall resistance against transfer of ions in this volume or compartment. According to the present invention the spacer parts are provided with openings that extend substantially in one direction, and wherein, in use, spacer parts are provided such that openings of adjacent spacer parts that belong to the same spacer extend substantially perpendicular to each other.

By providing the spacer parts with openings that extend substantially in one direction, it is possible to have a spacer part with a significant open area. This further reduces the resistance of the spacer part in the ion-exchanging process. The spacer is provided with an open structure that is open for more than 50%, preferably more than 70% and most preferably more than 75%. Experiments have shown that an increasing open structure of the spacer contributes to the efficiency of the overall process. Providing the openings of adjacent spacer parts substantially perpendicular to each other contributes to the strength and/or stability of a membrane stack. This further contributes to the use of open structures for the spacers according to the present invention. Preferably, the spacer part adjacent a membrane comprises or consists of the same material as this membrane. This improves the contact area between the spacer and the membrane thereby reducing the resistance in the process. Furthermore, this improved content enables the use of smaller/thinner membranes as the spacer contributes to the overall stability and/or strength. Preferably, the material after spacer parts is cross-linked to improve its behaviour.

The invention further relates to a cell for an ion-exchanging process comprising:
- a spacer as described above;
- a cation exchanging membrane; and
- an anion exchanging membrane.

The cell provides the same effects and advantages as those stated to the spacer described above.

In a preferred embodiment according to the present invention, in use, the first part of the spacer, comprising an anion-exchanging material, is provided adjacent the anion-exchanging membrane while the second part of the spacer, comprising a cation-exchanging material, is provided adjacent the cation-exchanging membrane.

Experiments have shown that the configuration of the cell wherein the spacer part comprising, or preferably consisting, of cation-exchanging material next to the cation exchanging membrane and the anion-exchanging part of the spacer near the anion-exchanging membrane results in the highest overall efficiency of the cell according to the present invention. Preferably, the two spacer parts comprise the same material as their corresponding membranes, so that the spacer part closest to the anion-exchanging material is made of the same material as this anion-exchanging membrane. The same applies for the cation-exchanging material in the other part of the spacer. This improves the contact area between the spacer and the membrane thereby reducing the resistance and increasing the overall stability of the cell. Preferably, the spacer parts are provided with openings that extend substantially in one direction and wherein furthermore the openings of two adjacent spacer parts extend substantially perpendicular to each other. This configuration further improves the stability and/or strength of the cell with the membranes. In a further preferred embodiment at least one of the membranes is provided with a thickness in the range 10-70 µm, and preferably 10-50 µm. By improving the stability and/or strength of the cell it is possible to reduce the thickness of the membranes that are used in this cell. This reduces the sizes of the stack of membranes and/or enables the use of more membranes without increasing the volume of the stack. This results in a higher efficiency of the cell.

The invention further relates to a device for operating an ion-exchanging process, the device comprising a spacer and/or cell as described above. Such device provides the same effects and advantages as those stated with reference to the spacer and the cell.

The invention further also relates to a method for operating an ion exchange process using the spacer and cell as described above. Such method provides the same effects and advantages as those stated with reference to the spacer and cell.

The invention further also relates to a method for providing a membrane connected to a corresponding spacer part comprising the step of spraying the spacer part material on the membrane surface.

By spraying the material for one part of the spacer directly on the surface of the membrane, the contact area between the spacer part and the membrane is improved. Additionally, by spraying the material of the spacer part directly on the surface of the membrane, the dimensions of the cell with the spacer and membrane can be reduced, thereby improving the overall efficiency of the cell.

Further advantages, features and details of the invention are elucidated on the basis of preferred embodiments thereof, when reference is made to the accompanying drawings in which:
- figure 1 shows a cell with a spacer comprising two parts according to the invention;
- figure 2A, B and C illustrate embodiments of the spacer parts according to the invention;
- figure 3 shows an experimental set-up;
- figure 4 shows measured power densities as function of flow rate;
- figure 5 shows measured power densities for different configurations of the spacer parts;
- figure 6 shows current-voltage curves;
- figure 7 shows resistance as function of flow rate; and
- figures 8 and 9 show spacer shadow effect and concentration polarization.

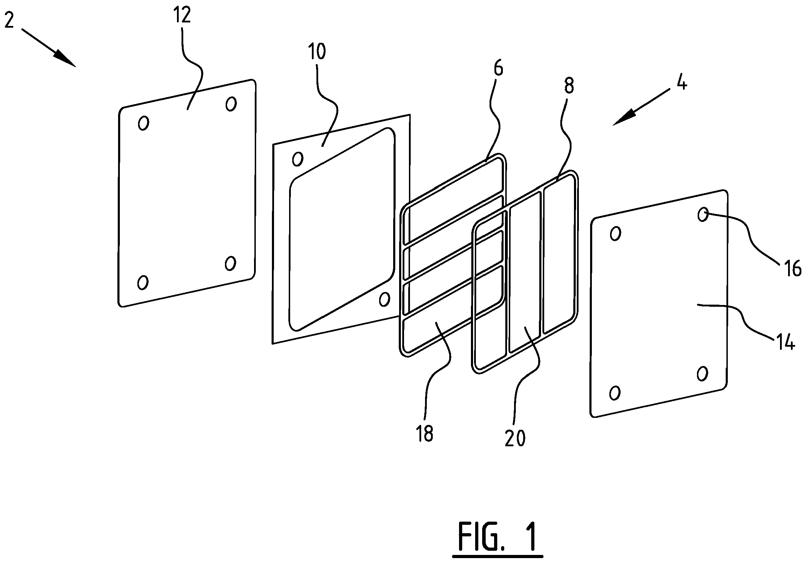

A cell 2 (figure 1) comprises a spacer 4 with a first part 6 and a second part 8. First part 6 and second part 8 of spacer 4 are, together with a gasket 10, provided between a cation exchange membrane 12 and an anion-exchange membrane 14. Membranes 12, 14 and gasket 10 are provided with openings 16 for flow of the liquid phases in cell 2. In the illustrated embodiment the spacer parts 6, 8 are made from ion-conductive material, from Neosepta CMX and Neosepta AMX, respectively. Spacer parts 6, 8 prevent direct contact between the cation exchange membrane 12 and anion exchange membrane 14. This prevents water splitting (bipolar membrane effect) that would decrease the open circuit voltage resulting in a lower power density.

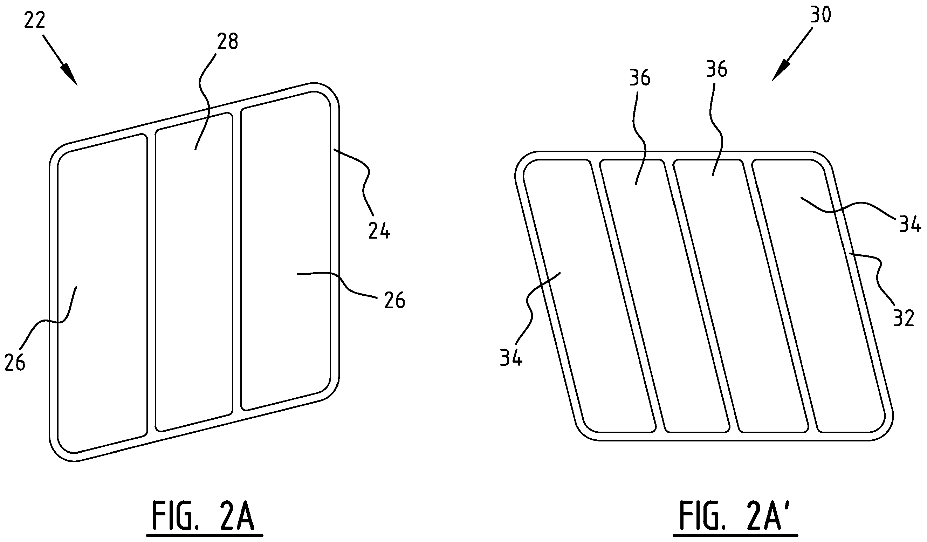

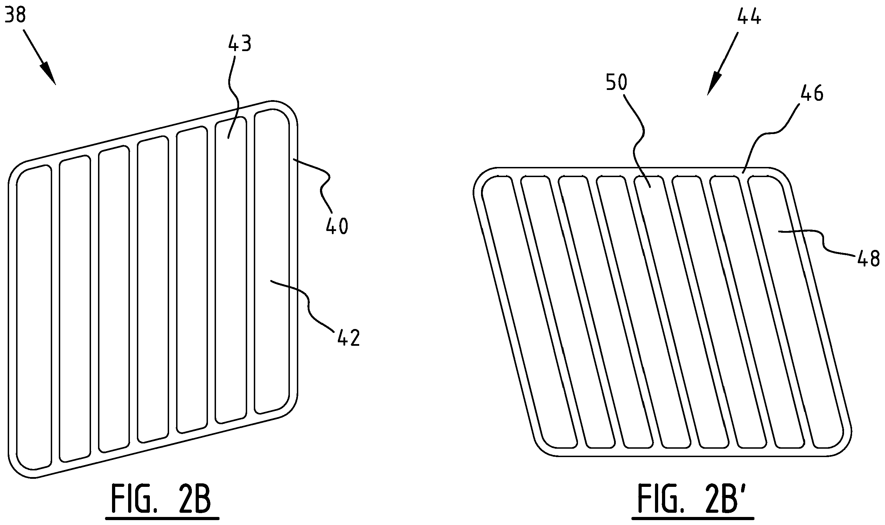

In a first embodiment for spacer parts 6, 8 a spacer part 22 (figure 2A) comprises a frame 24 from ion exchanging material. Part 22 is provided with two openings 26 extending along one of the sides of part 22 and a centre opening 28. In the illustrated embodiment the length of openings 26, 28 is about 130 mm with the edges having a size of 3 mm. In the other direction the size of spacer part 22 is about 102 mm. The spacer part 30 that together with spacer part 22 forms a spacer 4 is provided with an edge 32, side openings 34 and centre openings 36. In use these openings 34, 36 extend substantially perpendicular to opening 26, 28 of part 22. The width of opening 34 is about 27 mm and of opening 36 about 23,5 mm. The total width of spacer part 30 is about 136 mm, while in the other direction the width is about 102 mm. Spacer 4 using spacer parts 22, 30 is open for about 77%.

In a second embodiment of spacer 4 a first spacer part 38 is provided with edge 40, side openings 42 and centre openings 43. The width of the openings is about 11 mm. Outside dimensions of part 38 are similar to the other embodiment. The second part 44 comprises an edge 46, two side openings 48 and six centre openings 50, all provided with a width of about 10,4 mm. Overall dimensions are similar to the other spacer parts 22, 30, 38. The second embodiment has an overall open structure of about 54%.

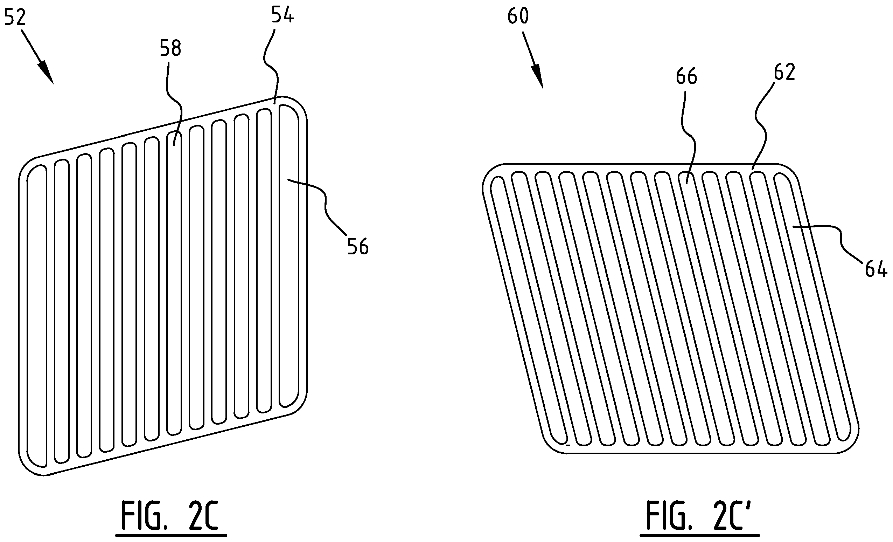

A third embodiment of spacer 4 has a spacer part 52 (figure 2C) with edge 54, two side openings 56 and ten centre openings 58. Part 52 has similar overall dimensions as the other embodiments. The corresponding spacer part 60 has edge 62, side openings 64 and twelve centre openings 66. The overall open structure is about 30%.

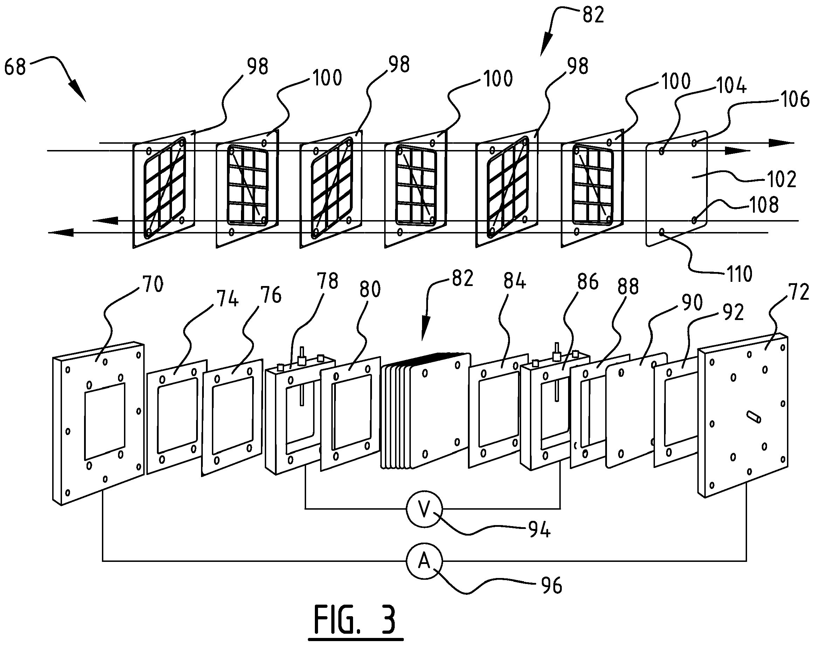

A device 68 (figure 3) comprises a first end plate 70 with a mesh electrode and a second end plate 72 with a mesh electrode. Between end plates 70, 72 there are provided, starting from end plate 70, a gasket with spacer 74, cation exchange membrane and gasket 76, measuring cell 78 with Haber-luggin capillary, gasket 80, cells 82, gasket 84, measuring cell 86, gasket 88, membrane 90, and gasket with spacer 92. Measuring cells 78, 86 are connected to volt meter 94. End plates 70, 72 are connected to current meter 96. Spacer parts are provided of the same material as the membranes, for the anion exchanging membranes Neosepta AMX, and for the cation exchanging membranes Neosepta CMX. Thickness of the AMX material is about 170 µm and for the CMX material about 140 µm. Silicon gasket 300 µm is used in the illustrated embodiment, the gaskets provided for three cation and three anion exchange membranes 96, 98 in the membrane cells 82. Cation exchange membrane 98 is provided with spacer part as well as the anion exchanging membrane 100. A membrane 102 is provided with openings 104 and 106 on the upper part of the illustrated embodiment to allow passage of the two different liquid phases for the different compartments. In the illustrated embodiment these liquid phases comprise 0.017 M NaCl and 0.5 M NaCl respectively. Other liquids can also be used. The same applies for the openings 108, 110 in the lower part of the illustrated embodiment. In the illustrated embodiment the exchange membranes have an active area of about 100 cm². The spacers have an open area of about 75%.

### Experiment 1

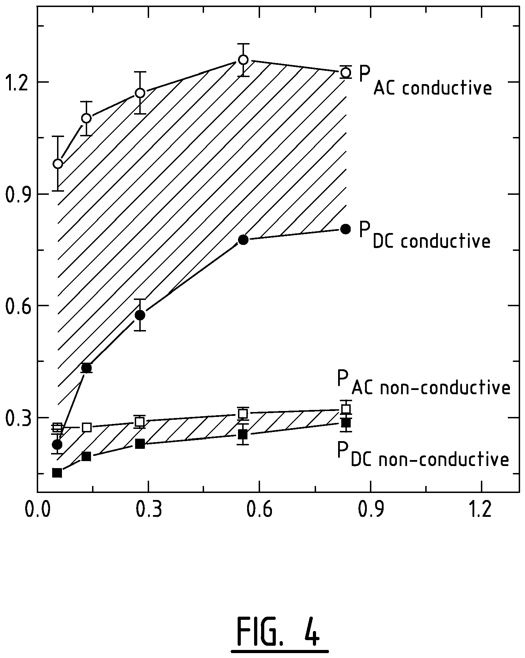

The ion conductive spacers according to the present invention with two parts are compared in a measurement with non-conductive spacers from PVC using the device illustrated in figure 3. The spacers are provided with same thickness to enable a fair comparison. Experimental results are shown in figure 4 for the different type of spacers using ion conductive material and non-conductive material with a spacer thickness of 0,3 mm. AC measurements are indicated with open symbols and DC measurements with filled symbols. Conductive spacer results are indicated with circles and non-conductive spacer results with rectangles. Results illustrate the power density (W/m²) versus the linear flow rate (cm/s) both for alternating current and direct current. The measured power density from direct current experiments represents a real value obtainable during reverse electro dialysis processes. As compared to the conventional non-conductive spacers the ion conductive spacers according to the present invention have a three times higher power density with similar open area and shape. Results for alternating currents are shown to extract information about maximal power density obtainable with a certain system configuration. For a given spacer configuration, the difference between the results obtained with direct current and alternating current indicate the effect of concentration polarization layers on the membrane and spacer surface. Concentration polarization occurs when the transport of ions through the membrane is faster compared to the transport of ions from the solution to the membrane surface. This causes a liquid layer close to the membrane with a concentration profile, which is an extra transport resistance. It is noted that this difference is relatively large for the ion-conductive spacer.

### Experiment 2

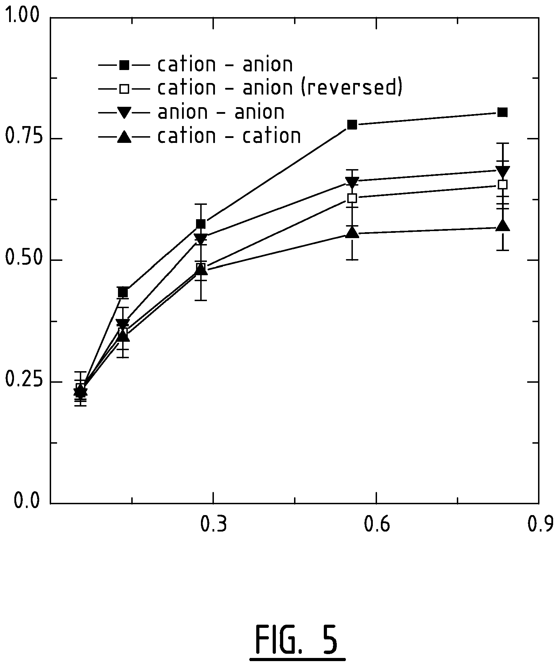

In a second experiment two ion conductive parts of the spacer are provided between an anion exchange membrane and a cation exchange membrane. Four different configurations of the spacer parts are being tested using the device illustrated in figure 3. These four different configurations are measured in experiments and results shown in figure 5, with the four configurations being:
- spacer part consisting of cation exchange material adjacent the cation exchange membrane and the spacer part consisting of anion exchanging material adjacent the anion exchanging membrane (filled rectangular symbols);
- similar configuration with the spacer parts in reversed order (open rectangular symbols);
- both spacer parts from anion exchanging material (filled triangular symbols pointing downwardly); and
- both spacer parts from cation exchanging material (filled triangular symbols pointing upwardly).
The results are shown in figure 5 for the power density (W/m²) versus the linear flow rate (cm/s) for a spacer thickness of about 0.3 mm. The highest power density was obtained with the configuration that was first mentioned in the list above. These results illustrate the importance of the configuration of spacer parts in combination with the membranes of the cell.

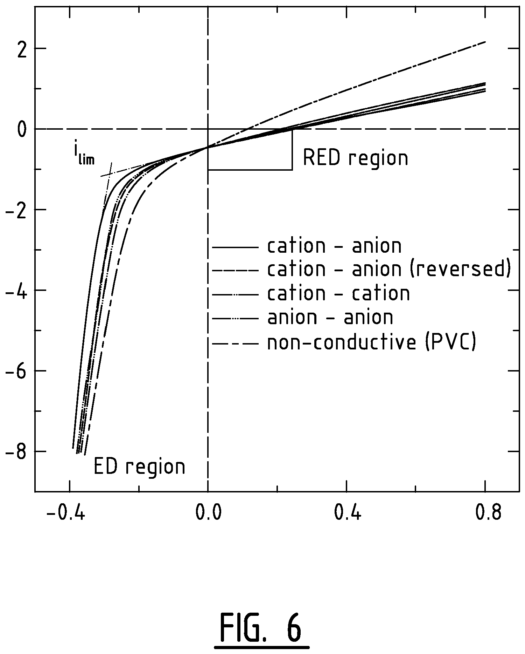

In the same experiment a current-voltage characterization of the above mentioned spacer configurations is made and a comparison with non-conductive conventional spacers is shown. Results are shown in figure 6. Results show the relation between voltage (V) versus current (A) for a spacer thickness of 0,3 mm. The left-hand side (left of the dashed vertical line) of figure 6 represents the electro dialysis area, while the area indicated by the rectangular box represents the reverse electro dialysis area. The non-conductive conventional spacer (PVC) (indicated with the striped-dashed line) has a higher resistance and reaches a limiting current density at a lower current as compared to the ion conductive two-part spacer according to the invention, preferably in a cation-anion configuration (solid line). This is caused by the blocking effect of the conventional spacer of membrane area, and, in addition, blocking of ion transport through the liquid compartment by this spacer. Surprisingly, these experiments indicate that choosing the correct configuration for the different spacer parts has a significant effect to minimise the stack resistance and maximise mass transfer. In the most optimal configuration ions transfer from the cation exchanging membrane through the first part of the spacer from cation exchanging material. Therefore, there is a minimal resistance to reach the centre of the compartment between the cation and anion exchanging membranes. The same applies for the anions that may transfer from the anion exchanging membrane through the second part of the spacer from anion exchanging material. In a reversed order (dashed line) this effect is minimal, as is for cation-cation (striped-two bullet line) and anion-anion (striped-three bullet line) configurations. In the device illustrated in figure 3 a power density of about 2 W/m² is achieved by using the most optimal configuration for the spacer according to the invention.

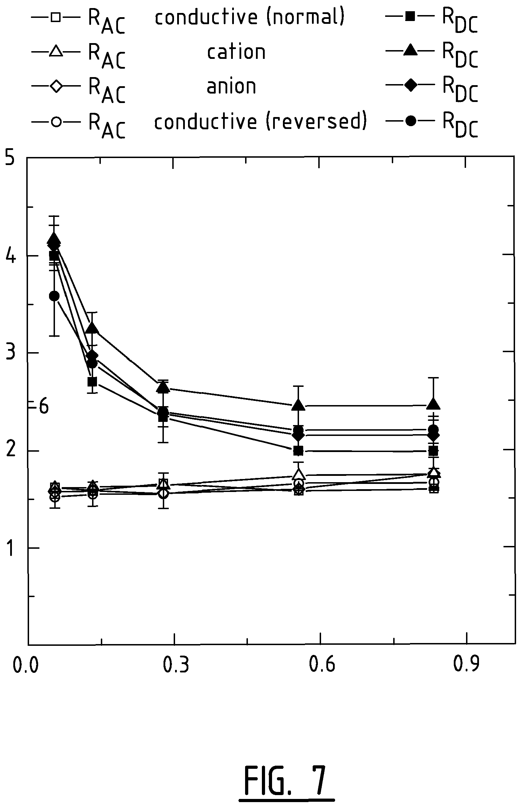

In figure 7 measurements of the resistance (Ω) versus the linear flow rate (cm/s) for the above mentioned four different configuration of the spacer according to the invention are shown. Results are shown both for alternating current (open symbols) and direct current (filled symbols). From the results it is understood that the resistance for the most optimal configuration (cation-anion indicated with rectangular symbols) has the lowest resistance, as compared with the cation-cation configuration (triangular symbols), anion-anion configuration (rotated rectangular symbols), and reversed configuration (circular symbols). This is especially true for the direct current measurements where ions transfer and ion resistance affects the resistance, while in alternating current there is (almost) no ion effect as the measurements do not take into account the concentration polarization layers. This results in the resistances for the four different configurations being almost equal and not significantly depending on the flow rate. In fact, the difference between alternating current and direct current measurements is that direct current measurements reflect all resistances inside a reverse electrodialysis stack, including resistance of concentration polarization layers on the membrane and ion conductive spacer surface. Alternating current experiments only measure pure stack components resistance and these measurements do not take into account resistance of concentration polarization layers. Therefore, the difference between AC and DC measurements represents concentration polarization phenomenon. Difference between theoretical value and value measured by AC method represents spacer shadow effect (blocking area by the spacer).

### Experiment 3

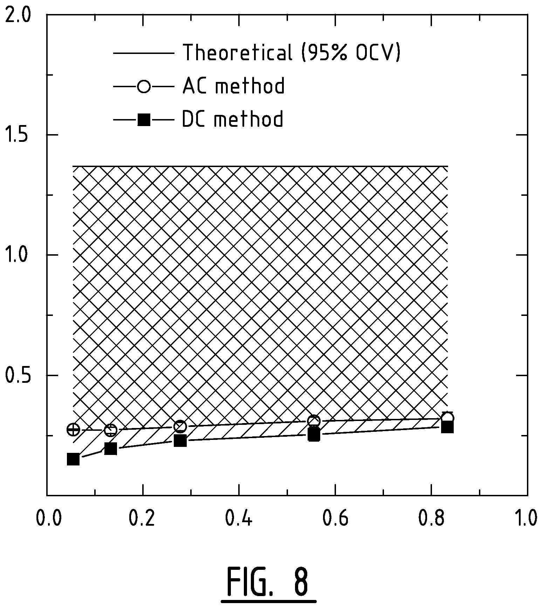

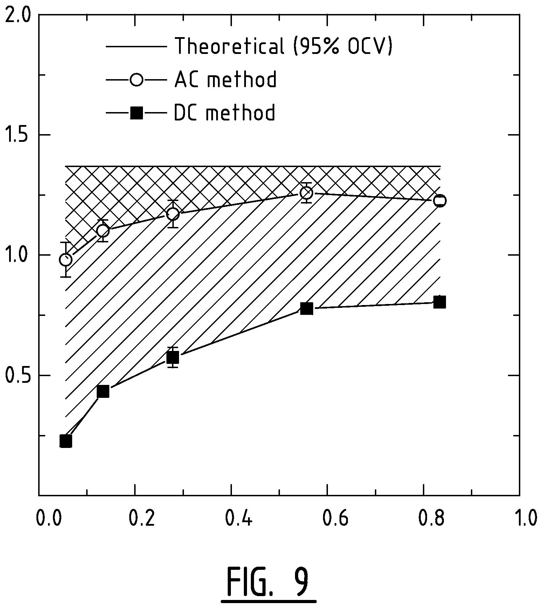

In a third experiment, when in an electro-membrane process, such as reverse electrodialysis, electrodialysis or capacitive deionization, a non-conductive spacer is applied, ionic transport is blocked due to the blocking of the membrane area which is in contact with the spacer. The ionic transport occurs through the areas which are not covered by a spacer. This effect is known as spacer shadow effect and has a significant influence on stack power density in reverse electrodialysis process. Measurements of power density (W/m²) as function of solution linear flow (cm/s) for a stack with non-conductive spacers (figure 8) and with conductive spacers (figure 9) illustrate this effect. In the experiments both spacers have an open area of approximately 50 %. Results for AC measurements are represented by circles and for DC measurements by rectangles. Theoretical values are represented by solid lines (95% OCV). In the figures the spacer shadow effect is indicated with a cross-marked area, and the concentration polarization is indicated with the dashed area. The measurements for the non-conductive spacers (figure 8) show that spacer shadow effect is a dominant effect for a stack with 0.32 mm (PVC) non-conductive spacers in order to enhance power generation in reverse electrodialysis process and it can not be minimized by increase of solution mixing (high flow rate). However, by implementing conductive spacers the spacer shadow effect is significantly minimized (Figure 9). Although the spacer shadow effect is just one of the relevant aspects for power generation process, it is still visible in the measurements due to fact that there is connection area between an anion exchange spacer part and a cation exchange spacer part. Concentration polarization phenomenon for this stack starts to play a big role. However, it can be minimized by optimization of stack hydrodynamics e.g. higher linear flow velocity.

The present invention is by no means limited to the above described preferred embodiments thereof. The rights sought are defined by the following claims within the scope of which many modifications can be envisages. For example, the spacer may comprise more than two parts.

## Claims

1. Spacer (4) for separating two adjacent membranes (12, 14) in an ion-exchanging process, the spacer comprising:
- a first part (6) comprising a first material; and
- a second part (8) comprising a second material, wherein at least one material is an ion exchanging material,
wherein the spacer parts are provided with openings (26), **characterized in that** the openings of one of the spacer parts extend substantially in one direction, and wherein, in use, the spacer parts are provided such that the openings of adjacent spacer parts that belong to the same spacer extend substantially perpendicular to each other, and wherein the spacer is provided with an open structure that is open for more than 50%.

2. Spacer according to claim 1, wherein the first and second materials are ion conductive materials.

3. Spacer according to claim 1 or 2, wherein the first part consists of the first material, this material being an anion conductive material.

4. Spacer according to claim 1, 2 or 3, wherein the second part consists of the second materials, being a cation conductive material.

5. Spacer according to one or more claims 1-4, wherein the spacer is provided with an open structure that is open for more than 70%, and most preferably more than 75%.

6. Cell (2) for an ion-exchanging process comprising:
- a spacer according to one or more of the claims 1-5;
- a cation exchanging membrane (12); and
- an anion exchanging membrane (14).

7. Cell according to claim 6, wherein, in use, the first part of the spacer comprising an anion exchanging material is provided adjacent the anion exchanging membrane, and wherein the second part of the spacer comprising a cation exchanging material is provided adjacent the cation exchanging membrane.

8. Cell according to claim 6 or 7, wherein the spacer parts and the corresponding membranes comprise the same material.

9. Cell according to claims 6, 7 or 8, wherein at least one of the parts of the spacer is connected to the corresponding membrane.

10. Cell according to claim 9, wherein the spacer part is sprayed on the membrane surface.

11. Cell according to one or more of claims 6-10, wherein at least one of the membranes is provided with a thickness in the range of 10-70 µm, and preferably 10-50 µm.

12. Device (68) for operating an ion-exchanging process, comprising a spacer (4) and/or cell (2) according to one or more of the foregoing claims.

13. Method for operating an ion exchange process using a spacer (4) and/or cell (2) according to one or more of the foregoing claims.

## Patentansprüche

1. Abstandhalter (4) zum Trennen zweier benachbarter Membranen (12, 14) in einem lonenaustauschprozess, wobei der Abstandhalter umfasst:
- einen ersten Teil (6), der ein erstes Material umfasst; und
- einen zweiten Teil (8), der ein zweites Material umfasst, wobei mindestens ein Material ein ionenaustauschendes Material ist,
wobei die Teile des Abstandhalters mit Öffnungen (26) versehen sind, **dadurch gekennzeichnet, dass** sich wenigstens die Öffnungen von einem der Teile des Abstandhalters in einer Richtung erstrecken, und wobei die Teile des Abstandhalters bei Verwendung derart vorgesehen sind, dass die Öffnungen benachbarter Teile des Abstandhalters, die zum gleichen Abstandhalter gehören, sich senkrecht zu einander erstrecken, und wobei der Abstandhalter mit einer offenen Struktur versehen ist, die mehr als 50% offen ist.

2. Abstandhalter nach Anspruch 1, wobei das erste und das zweite Material ionenleitfähige Materialien sind.

3. Abstandhalter nach Anspruch 1 oder 2, wobei der erste Teil aus dem ersten Material besteht, wobei dieses Material ein anionenleitfähiges Material ist.

4. Abstandhalter nach Anspruch 1, 2 oder 3, wobei der zweite Teil aus dem zweiten Material besteht, das ein kationenleitfähiges Material ist.

5. Abstandhalter nach einem oder mehreren der Ansprüche 1-4, wobei der Abstandhalter mit einer offenen Struktur versehen ist, die mehr als 70% und meistbevorzugt mehr als 75% offen ist.

6. Zelle (2) für einen lonenaustauschprozess, umfassend:
- einen Abstandhalter nach einem oder mehreren der Ansprüche 1-5;
- eine kationenaustauschende Membran (12); und
- eine anionenaustauschende Membran (14).

7. Zelle nach Anspruch 6, wobei bei Verwendung der erste Teil des Abstandhalters, der ein anionenaustauschendes Material umfasst, benachbart zu der anionenaustauschenden Membran vorgesehen ist, und wobei der zweite Teil des Abstandhalters, der ein kationenaustauschendes Material umfasst, benachbart zu der kationenaustauschende Membran vorgesehen ist.

8. Zelle nach Anspruch 6 oder 7, wobei die Teile des Abstandhalters und die entsprechenden Membranen das gleiche Material umfassen.

9. Zelle nach den Ansprüchen 6, 7 oder 8, wobei wenigstens einer der Teile des Abstandhalters mit der entsprechenden Membran verbunden ist.

10. Zelle nach Anspruch 9, wobei der Teil des Abstandhalters auf die Membranoberfläche gesprüht ist.

11. Zelle nach einem oder mehreren der Ansprüche 6-10, wobei mindestens eine der Membranen mit einer Dicke im Bereich von 10-70 µm und vorzugsweise von 10-50 µm bereitgestellt ist.

12. Vorrichtung (68) zum Betreiben eines lonenaustauschprozesses, die einen Abstandhalter (4) und/oder eine Zelle (2) nach einem oder mehreren der vorhergehenden Ansprüche, umfasst.

13. Verfahren zum Betreiben eines lonenaustauschprozesses unter Verwendung eines Abstandhalters (4) und/oder einer Zelle (2) nach einem oder mehreren der vorhergehenden Ansprüche.

## Revendications

1. Espaceur (4) destiné à séparer deux membranes adjacentes (12, 14) dans un processus d'échange d'ions, l'espaceur comprenant :
- une première partie (6) comprenant un premier matériau ; et
- une seconde partie (8) comprenant un second matériau,
dans lequel au moins un matériau est un matériau d'échange d'ions,
dans lequel les parties de l'espaceur sont munies d'ouvertures (26), **caractérisé en ce que** les ouvertures de l'une des parties de l'espaceur s'étendent dans une direction,
et dans lequel, pendant l'utilisation, les parties de l'espaceur sont prévues de sorte que les ouvertures des parties adjacentes de l'espaceur qui appartiennent au même espaceur s'étendent perpendiculairement les unes aux autres, et dans lequel l'espaceur est muni d'une structure ouverte qui est ouverte à plus de 50%.

2. Espaceur selon la revendication 1, dans lequel le premier et le second matériaux sont des matériaux conducteurs d'ions.

3. Espaceur selon la revendication 1 ou 2, dans lequel la première partie se compose du premier matériau, ce matériau étant un matériau conducteur d'anions.

4. Espaceur selon la revendication 1, 2 ou 3, dans lequel la seconde partie se compose du second matériau, qui est un matériau conducteur de cations.

5. Espaceur selon une ou plusieurs des revendications 1 à 4, dans lequel l'espaceur est muni d'une structure ouverte qui est ouverte à plus de 70%, et de préférence à plus de 75%.

6. Cellule (2) destinée à un processus d'échange d'ions comprenant :
- un espaceur selon une ou plusieurs des revendications 1 à 5 ;
- une membrane d'échange de cations (12) ; et
- une membrane d'échange d'anions (14).

7. Cellule selon la revendication 6, dans laquelle, pendant l'utilisation, la première partie de l'espaceur comprenant un matériau d'échange d'anions est prévu de manière adjacente à la membrane d'échange d'anions, et dans lequel la seconde partie de l'espaceur comprenant un matériau d'échange de cations est prévue de manière adjacente à la membrane d'échange de cations.

8. Cellule selon la revendication 6 ou 7, dans lequel les parties de l'espaceur et les membranes correspondantes comprennent le même matériau.

9. Cellule selon les revendications 6, 7 ou 8, dans lequel au moins l'une des parties de l'espaceur est reliée à la membrane correspondante.

10. Cellule selon la revendication 9, dans laquelle la partie de l'espaceur est pulvérisée sur la surface de la membrane.

11. Cellule selon une ou plusieurs des revendications 6 á 10, dans laquelle au moins l'une des membranes est munie d'une épaisseur de l'ordre de 10 à 70 µm, et de préférence de 10 à 50 µm.

12. Dispositif (68) destiné à exécuter un processus d'échange d'ions, comprenant un espaceur (4) et/ou une cellule (2) selon une ou plusieurs des revendications précédentes.

13. Procédé d'utilisation d'un processus d'échange d'ions à l'aide d'un espaceur (4) et/ou d'une cellule (2) selon une ou plusieurs des revendications précédentes.
